# EUROPEAN PATENT APPLICATION

(11) **EP 4 471 117 A1**
(43) Date of publication of application: **04.12.2024**
(21) Application number: 22924228.4
(22) Date of filing: 28.12.2022
(51) Int. Cl.: C12G 3/04, C12G 3/06

(54) **BEVERAGE CONTAINING COMPONENT DERIVED FROM WOODEN CONTAINER**

(30) Priority: 28.01.2022 JP 2022011666
(71) Applicant: Suntory Holdings Limited, Osaka-shi, Osaka 530-8203 (JP)
(72) Inventor: KOZU, Saki, Kawasaki-shi, Kanagawa 211-0067 (JP); YOSHIHIRO, Akira, Kawasaki-shi, Kanagawa 211-0067 (JP)
(74) Representative: Vossius & Partner Patentanwälte Rechtsanwälte mbB
(86) International application number: PCT/JP2022/048502
(87) International publication number: WO 2023/145381

(57) **Abstract**

The present invention addresses the problem of reducing the bitterness and/or astringency of a wood component in an alcoholic beverage. In the present invention, the pH and acidity of an alcoholic beverage are set to within specific ranges.

## Description

### TECHNICAL FIELD

The present invention relates to a beverage containing a specific component derived from a wooden container such as a barrel, namely at least one compound selected from the group consisting of gallic acid, syringic acid, vanillin, and syringaldehyde.

### BACKGROUND ART

It is known that elution of components derived from a wooden container (wood components) into liquor, such as brandy aged with wooden containers such as barrels, with alcohol provides the depth of taste to alcoholic beverages. The thus obtained liquor may be drunk as it is, with ice, or as liquor diluted with water.

PTL 1 describes a technique for reducing the bitterness and astringency of gallic acid and/or sinapyl aldehyde while preserving deep scent and a complicated flavor of the components using limonene or 1-terpinen-4-ol.

### CITATION LIST

### PATENT LITERATURE

PTL 1: Japanese Patent Laid-Open No. 2017-176162

### SUMMARY OF INVENTION

### TECHNICAL PROBLEM

An object of the present invention is to reduce the astringency or the bitterness that a specified wood component, namely at least one compound selected from the group consisting of gallic acid, syringic acid, vanillin, and syringaldehyde, has in an alcoholic beverage.

### SOLUTION TO PROBLEM

The present inventors have examined to find means for solving the above-mentioned problem and found that it is effective to adjust the pH and the acidity of a beverage to specific ranges. That is, the present invention relates to, but not limited to, the following.
1. A packaged alcoholic beverage, containing:
   at least one compound selected from the group consisting of gallic acid, syringic acid, vanillin, and syringaldehyde at a total content of 0.01 to 10 ppm,
   wherein a pH of the beverage is 3.2 or more and less than 5.0, and
   acidity of the beverage in terms of citric acid is 0.26 g/100 mL or more.
2. The beverage according to item 1, wherein a content of gallic acid is 0.01 to 4 ppm.
3. The beverage according to item 1 or 2, wherein a content of syringic acid is 0.01 to 3 ppm.
4. The beverage according to any one of items 1 to 3, wherein a content of vanillin is 0.01 to 3 ppm.
5. The beverage according to any one of items 1 to 4, wherein a content of syringaldehyde is 0.01 to 7 ppm.
6. The packaged beverage according to any one of items 1 to 5, wherein an alcohol content is 1 to 16 %v/v.
7. The packaged beverage according to any one of items 1 to 6, containing carbon dioxide.
8. The beverage according to any one of items 1 to 7, containing citric acid.
9. The beverage according to any one of items 1 to 8, containing gallic acid.

### ADVANTAGEOUS EFFECTS OF INVENTION

The present invention can reduce the bitterness or the astringency caused by at least one compound selected from the group consisting of gallic acid, syringic acid, vanillin, and syringaldehyde.

In an embodiment, the present invention can also utilize the deep scent and a complicated flavor of the wood components to achieve favorable drinking satisfaction specific to liquor. The "drinking satisfaction" as used herein means properties of an alcohol-containing beverage such as complicated taste of the flavor of an alcohol-containing beverage and the thickness and the length of aftereffect derived from alcohol that provides satisfaction during the drinking.

In an embodiment, the present invention can achieve high drinkability in an alcoholic beverage containing the wood component. The "drinkability" as used herein means ease of drinking a beverage and a property of the beverage that makes drinkers desire to drink even many glasses of the beverage.

### DESCRIPTION OF EMBODIMENTS

An alcoholic beverage of the present invention contains a specified wood component, and has a pH and acidity in specified ranges.

The "ppm" as used herein means ppm by weight/volume (w/v) unless otherwise specified. This is synonymous with "mg/L".

### (Wood component)

The alcoholic beverage of the present invention contains at least one compound selected from the group consisting of gallic acid, syringic acid, vanillin, and syringaldehyde.

The beverage may contain only one of the wood components, or may contain two or more thereof. The total content of the wood component(s) in the beverage is 0.01 to 10 ppm, preferably 0.01 to 7 ppm, more preferably 0.01 to 4 ppm, and more preferably 0.01 to 3 ppm. In an embodiment, the content is 0.05 to 2 ppm.

In an embodiment, the alcoholic beverage of the present invention contains gallic acid. An example of the content of gallic acid in the beverage of the embodiment is 0.01 to 4 ppm, 0.01 to 3 ppm, 0.01 to 2 ppm, or 0.05 to 2 ppm.

In another embodiment, the alcoholic beverage of the present invention contains syringic acid. An example of the content of syringic acid in the beverage of the embodiment is 0.01 to 7 ppm, 0.01 to 6 ppm, or 0.01 to 3 ppm.

In another embodiment, the alcoholic beverage of the present invention contains vanillin. An example of the content of vanillin in the beverage of the embodiment is 0.01 to 7 ppm, 0.01 to 6 ppm, or 0.01 to 3 ppm.

In another embodiment, the alcoholic beverage of the present invention contains syringaldehyde. An example of the content of syringaldehyde in the beverage of the embodiment is 0.01 to 7 ppm, 0.01 to 6 ppm, or 0.01 to 3 ppm.

In another embodiment, the alcoholic beverage of the present invention contains gallic acid and syringic acid; gallic acid and vanillin; gallic acid and syringaldehyde; syringic acid and vanillin; syringic acid and syringaldehyde; vanillin and syringaldehyde; gallic acid, syringic acid, and vanillin; gallic acid, syringic acid, and syringaldehyde; gallic acid, vanillin, and syringaldehyde; syringic acid, vanillin, and syringaldehyde; or gallic acid, syringic acid, vanillin, and syringaldehyde.

The contents of gallic acid, syringic acid, vanillin, and syringaldehyde in the beverage may be measured by any method such as HPLC or LC-MS known to those skilled in the art, and the contents can be measured, for example, by HPLC under the following conditions.

### <Conditions for analyzing wood components>

Measuring apparatus: 1260 Infinity II LC system (Agilent Technologies Japan, Ltd.)
Column: Luna C18(2) 150 × 4.6 mm, particle size: 5 µm (Phenomenex Inc.)
Column temperature: 40°C

| | |
|---|---|
| Detection wavelength: | Gallic acid: 260 nm |
| | Syringic acid: 280 nm |
| | Vanillin: 280 nm |
| | Syringaldehyde: 310 nm |

Mobile phase:
Solution A Ultrapure water: acetic acid = 98:2 (containing sodium acetate at 33 mM)
Solution B Ultrapure water: acetic acid:methanol:1-propanol = 42:2:50:6 (containing sodium acetate at 33 mM)

Liquid feeding conditions:

**[Table A]**

| Time (minute) | Solution A (%) | Solution B (%) |
|---|---|---|
| 0 | 97 | 3 |
| 12 | 97 | 3 |
| 22 | 85 | 15 |
| 45 | 80 | 20 |
| 55 | 80 | 20 |
| 70 | 0 | 100 |
| 90 | 0 | 100 |

Injection volume: 5.0 µL

### (pH)

The pH of the beverage of the present invention is 3.2 or more and less than 5.0, preferably 3.5 or more and less than 5.0, more preferably 3.5 to 4.5, more preferably 3.6 to 4.2, and more preferably 3.7 to 4.1.

The pH of the beverage as used herein means a pH measured in the beverage from which carbon dioxide is removed. For example, the pH can accordingly be measured after steps of degassing and shaking the beverage. If the pH and the acidity are adjusted to suitable ranges, respectively, the bitterness or the astringency of the wood component can be reduced.

A pH adjustor such as malic acid, phosphoric acid, lactic acid, tartaric acid, succinic acid, gluconic acid, phytic acid, acetic acid, fumaric acid, sodium bicarbonate, sodium hydrogen carbonate, sodium citrate, potassium citrate, or potassium carbonate can be used for adjusting the pH.

### (Acidity)

The acidity of the beverage of the present invention is 0.26 g/100 mL or more, preferably 0.41 g/100 mL or more, and more preferably 0.41 to 0.60 g/100 mL. If the acidity and the pH are adjusted to suitable ranges, respectively, the bitterness or the astringency of the wood component can be reduced.

The "acidity" as used herein is a value to be used as an index of the acid content in a beverage from which carbon dioxide is removed, and can be calculated from the amount of alkali such as sodium hydroxide required for neutralization (pH 7.0) when the alkali is added for the neutralization to a certain amount of the beverage (sample) from which carbon dioxide is removed. An automatic titrator (Mettler toledo DL50 or the like) can be used for measuring the acidity. In the present invention, a value in terms of the amount of citric acid (calculated from the neutralization amount on the assumption that all the acids contained in the beverage are citric acid) is used as the acidity.

An organic or inorganic acid such as citric acid, malic acid, phosphoric acid, lactic acid, tartaric acid, succinic acid, gluconic acid, phytic acid, acetic acid, or fumaric acid can be used for adjusting the acidity.

### (Alcohol content)

The beverage of the present invention contains alcohol. The term "alcohol" as described herein means ethanol unless otherwise specified.

The alcohol content in the beverage of the present invention is preferably 1 to 16 %v/v, more preferably 3 to 16 %v/v, and more preferably 3 to 12 %v/v, and more preferably 3 to 10 %v/v.

Alcohol may be incorporated into the beverage by any means. Since one of the particularly preferable embodiments of the present invention is RTD such as *chuhai,* the beverage of the present invention preferably contains distilled liquor. The distilled liquor is not limited depending on the raw materials or the production method thereof. Examples of the distilled liquor include spirits (for example, vodka, rum, tequila, gin, aquavit, and Korn), alcohol for brewing, neutral spirits, liqueurs, whiskey, brandy, and *shochu.* These distilled liquors in which fruits, vegetables, green tea, spice, herbs, and the like are immersed may be used.

The alcohol content of the beverage herein can be measured by any known method, for example, with a vibrating densimeter. Specifically, carbon dioxide is removed from the beverage by filtration or ultrasonic waves as needed to prepare a sample. The sample is subjected to direct fire distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

The type of the alcoholic beverage of the present invention is not particularly limited, but the alcoholic beverage is preferably a highball, *chuhai,* a cocktail, a sour, or the like. If the terms "highball" and *"chuhai"* are used with reference to the beverage of the present invention, the terms mean beverages containing water, distilled liquor, and carbon dioxide. A highball and *chuhai* may further contain fruit juice. If the term "sour" is used with reference to the beverage of the present invention, the term means a beverage containing a spirit, acidic fruit juice of citrus fruits or the like, a sweet component, and carbon dioxide. If the term "cocktail" is used with reference to the beverage of the present invention, the term means an alcoholic beverage made by mixing fruit juice and the like into base liquor.

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by Tuchenhagen GmbH, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure is not particularly limited, and is preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, the air in the container in the gas volume measuring apparatus is removed (snift), followed by the shaking, and the carbon dioxide pressure is measured. The carbon dioxide pressure as used herein means carbon dioxide pressure at 20°C unless otherwise specified.

### (Fruit juice)

The beverage of the present invention may contain fruit juice. The fruit juice may be in any form of straight juice, which is juice squeezed from fruits to be used as it is, or concentrated juice, which is obtained by concentrating the squeezed juice. Transparent fruit juice or cloudy fruit juice can also be used. Whole fruit juice, obtained by crushing whole fruits including the skins of fruits and removing only particularly coarse hard solid matter such as seed therefrom, fruit puree, obtained by straining fruits, or fruit juice into which the pulp of dried fruits is crushed or that is extracted from the pulp can also be used.

Examples of the type of the fruit juice include, but not particularly limited to, citrus fruit juices (*e.g.,* orange juice, *Citrus unshiu* juice, grapefruit juice, lemon juice, lime juice, *Citrus junos* juice, *Citrus iyo* juice, *Citrus natsudaidai* juice, *Citrus hassaku* juice, *Citrus reticulata* var *poonensis* juice, *Citrus depressa* juice, *Citrus sphaerocarpa* juice), apple juice, grape juice, peach juice, tropical fruit juice (pineapple juice, guava juice, banana juice, mango juice, acerola juice, lychee juice, papaya juice, passion fruit juice, and the like), other fruit juices (Japanese apricot juice, Japanese pear juice, apricot juice, Japanese plum juice, berry juice, kiwi fruit juice, and the like), strawberry juice, and melon juice. These juices may be used alone or in combination of two or more.

The content of the fruit juice in the beverage of the present invention is not particularly limited, and is typically 0 to 100 %w/w, less than 10 %w/w, or 0 to 9 %w/w in terms of percent fruit juice content.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded. Percent fruit juice content (%w/w) = <Amount of fruit juice added (g)> × <concentration factor>/100 mL/<specific gravity of beverage> × 100

### (Other components)

As long as the effect of the present invention is not deteriorated, additives such as flavorings, vitamins, dyes, an antioxidant, a preservative, seasonings, extract, and a quality stabilizer to be commonly blended into beverages can be blended into the beverage in the present invention in addition.

In an embodiment of the beverage of the present invention, the total content of iso-α-acids is 0 to 0.0001 g/L. In another embodiment of the beverage of the present invention, the weight ratio of the citric acid content/the tartaric acid content is 1.1 or more.

### (Packaged beverage)

The beverage of the present invention is provided in the form of a packaged beverage. The form of the container includes, but not limited to, metal containers such as cans, PET bottles, cartons, bottles, and pouches. For example, a sterilized packaged product can be produced by a method involving filling a container with the beverage of the present invention, followed by heat sterilization such as retort sterilization or a method involving sterilizing the beverage and filling a container with the sterilized beverage.

### (Related method)

In another aspect, the present invention is a method for reducing the bitterness or the astringency of at least one compound selected from the group consisting of gallic acid, syringic acid, vanillin, and syringaldehyde in an alcoholic beverage containing at least one compound selected from said compounds, wherein the total content of the compound(s) is 0.01 to 10 ppm. The method includes the following steps:
a step of adjusting the pH of the beverage to 3.2 or more and less than 5.0 and
a step of adjusting the acidity (in terms of citric acid) of the beverage to 0.26 g/100 mL or more.

The method may further include a step of blending raw materials so that the total content of the wood component(s) in the beverage is 0.01 to 10 ppm.

The types of the components in the beverage, the contents thereof, the acidity, the pH, the carbon dioxide gas pressure, the preferable ranges thereof, and methods for the adjustment thereof are as mentioned above with respect to the beverage of the present invention, or are obvious from them. The timings thereof are not limited, either. For example, all the above-mentioned steps may be performed at the same time, and the steps may be performed separately or in random order. The finally obtained beverage has only to satisfy the above-mentioned conditions.

### (Numerical range)

In the description for clarification, the numerical ranges as used herein include their end points, namely the lower limit values and the upper limit values.

### EXAMPLES

Although the present invention will be described based on Examples hereinafter, the present invention is not limited to these Examples.

### (Test Example 1) Taste of gallic acid and influence of pH and acidity thereon

Multiple sample beverages at an alcohol content of 7 %v/v were prepared and sensorily evaluated.

Specifically, the alcohol aqueous solutions at an alcohol content of 7 %v/v were prepared and varied in the pH, the acidity in terms of citric acid, and the gallic acid content. The acidity was adjusted with citric acid, and a small amount of a pH adjustor was used for adjusting the pH.

Three special panelists then sensorily evaluated the sample beverages in accordance with the following criteria to calculate the average values of the scores thereof.

### (Lack of bitterness)

1 point: The bitterness is strongly felt.
2 points: The bitterness is felt.
3 points: The bitterness is a little felt.
4 points: The bitterness is not quite felt.
5 points: The bitterness is not felt.

### (Lack of astringency)

1 point: The astringency is strongly felt.
2 points: The astringency is felt.
3 points: The astringency is a little felt.
4 points: The astringency is not quite felt.
5 points: The astringency is not felt.

### (Drinking satisfaction specific to liquor)

1 point: The sample beverage has low drinking satisfaction specific to liquor.
2 points: The sample beverage has slightly low drinking satisfaction specific to liquor.
3 points: The sample beverage has slightly high drinking satisfaction specific to liquor.
4 points: The sample beverage has high drinking satisfaction specific to liquor.
5 points: The sample beverage has very high drinking satisfaction specific to liquor.

### (Drinkability)

1 point: The drinkability is low.
2 points: The drinkability is slightly low.
3 points: The drinkability is slightly high.
4 points: The drinkability is high.
5 points: The drinkability is very high.

### (Overall rating)

1 point: Unpreferable
2 points: Slightly unpreferable
3 points: Slightly preferable
4 points: Preferable
5 points: Very preferable

As the overall rating, it was evaluated besides the above-mentioned four items whether each sample beverage had a preferable taste as a whole.

If two or more items are evaluated as 2 points or more and less than 3 points, or one or more items are evaluated as 1 point or more and less than 2 points on the sensory test, the sample beverage is unpreferable. If the overall rating is evaluated as 3 points or more, the sample beverage is accepted. This evaluation test was also used in the other Test Examples.

The special panelists established a consensus on the relationship between the scores and the tastes using standard samples corresponding to each of the scores in advance for reducing individual differences in the evaluations.

The following table shows the results.

**[Table 1]**

| Sample No. | | 1 | 2 | 3 | 4 | 5 | 6 | 7 |
|---|---|---|---|---|---|---|---|---|
| | | Comparative Example | Comparative Example | Comparative Example | Comparative Example | Example | Example | Example |
| Gallic acid | mg/L | 0.008 | 0.010 | 0.010 | 0.010 | 0.010 | 0.010 | 4.0 |
| pH | | 3.1 | 3.1 | 3.5 | 3.1 | 3.2 | 3.5 | 3.5 |
| Acidity | g/100 ml | 0.25 | 0.25 | 0.25 | 0.26 | 0.26 | 0.41 | 0.41 |
| Alcohol | %v/v | 7 | 7 | 7 | 7 | 7 | 7 | 7 |
| Lack of bitterness | | Δ | ○ | ○ | Δ | ○ | 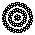 | ○ |
| | | 3.8 | 3.5 | 3.9 | 2.8 | 3.5 | 4 | 3.3 |
| Lack of astringency | | 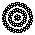 | ○ | ○ | ○ | ○ | 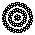 | ○ |
| | | 5 | 3.8 | 3.8 | 3.2 | 3.4 | 5 | 3.1 |
| Drinking Satisfaction specific to liquor | | × | × | Δ | Δ | ○ | Δ | ○ |
| | | 1.4 | 1.8 | 2.9 | 2.7 | 3 | 2.9 | 3 |
| Drinkability | | Δ | Δ | ○ | ○ | ○ | ○ | ○ |
| | | 2.4 | 2.9 | 3.3 | 3.3 | 3.6 | 3.3 | 3.2 |
| Overall rating | | × | × | Δ | Δ | ○ | ○ | ○ |
| | | 1.5 | 1.6 | 2.9 | 2.8 | 3 | 3.6 | 3.4 |

The bitterness and the astringency increased with a rise in the content of gallic acid. If the pH and the acidity were both adjusted to suitable ranges in response thereto, the bitterness and the astringency were reduced (Samples 1 to 6). Even though the concentration of gallic acid was increased, the effect was in an acceptable range (Sample 7).

### (Test Example 2) Influence of pH and acidity

Multiple sample beverages at an alcohol content of 7 %v/v were prepared and sensorily evaluated in the same way as in Test Example 1.

The sample beverages were varied in the pH or the acidity in terms of citric acid with the content of gallic acid therein fixed. The following table shows the results.

**[Table 2]**

| Sample No. | | 7 | 8 | 9 | 10 | 11 | 12 |
|---|---|---|---|---|---|---|---|
| | | Example | Example | Comparative Example | Example | Example | Example |
| Gallic acid | mg/L | 4.0 | 4.0 | 4.0 | 4.0 | 4.0 | 4.0 |
| pH | | 3.5 | 4.5 | 5.0 | 3.5 | 3.5 | 3.5 |
| Acidity | g/ 100 ml | 0.41 | 0.41 | 0.41 | 0.45 | 0.5 | 0.6 |
| Alcohol | %v/v | 7 | 7 | 7 | 7 | 7 | 7 |
| Lack of bitterness | | ○ | 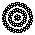 | 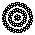 | 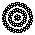 | 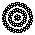 | ○ |
| | | 3.3 | 4.8 | 5 | 4 | 4 | 3.6 |
| Lack of astringency | | ○ | 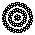 | 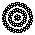 | 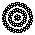 | 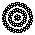 | 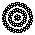 |
| | | 3.1 | 4.6 | 4.5 | 4.3 | 4 | 4 |
| Drinking Satisfaction specific to liquor | | ○ | ○ | Δ | ○ | ○ | ○ |
| | | 3 | 3 | 2.3 | 3.8 | 3.2 | 3.1 |
| Drinkability | | ○ | Δ | × | 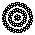 | ○ | ○ |
| | | 3.2 | 2.9 | 1.2 | 4.2 | 3.8 | 3.5 |
| Overall rating | | ○ | ○ | × | 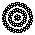 | 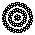 | 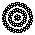 |
| | | 3.4 | 3 | 1.8 | 4.2 | 4 | 4 |

Preferable effects were obtained in a specified pH range and in a relatively wide acidity range.

### (Test Example 3)

Sample beverages varied in various conditions were prepared in accordance with Test Examples 1 and 2.

A sample beverage similar to Sample 6 was first prepared using malic acid instead of citric acid (Sample 13).

The alcohol content, the gallic acid content, the pH, and the acidity were varied (Samples 14 to 18). In these cases, not malic acid but citric acid was used. The following table shows the results.

**[Table 3]**

| Sample No. | | 13 | 14 | 15 | 16 | 17 | 18 |
|---|---|---|---|---|---|---|---|
| | | Example | Example | Example | Example | Example | Example |
| Gallic acid | mg/L | 0.010 | 0.2 | 0.5 | 1 | 2 | 4 |
| pH | | 3.5 | 3.6 | 3.6 | 3.6 | 3.7 | 3.7 |
| Acidity | g/100 ml | 0.41 | 0.41 | 0.41 | 0.42 | 0.42 | 0.43 |
| Alcohol | %v/v | 7 | 7 | 9 | 5 | 3 | 16 |
| Lack of bitterness | | ○ | 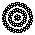 | 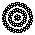 | 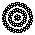 | 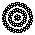 | ○ |
| | | 3.6 | 4.6 | 4.7 | 4.3 | 4.4 | 3.3 |
| Lack of astringency | | 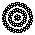 | 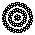 | 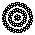 | 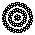 | ○ | ○ |
| | | 5 | 4.8 | 4.5 | 4.2 | 3.7 | 3.1 |
| Drinking Satisfaction specific to liquor | | ○ | 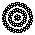 | 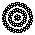 | 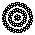 | 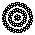 | ○ |
| | | 3 | 4.2 | 4.4 | 5 | 5 | 3.8 |
| Drinkability | | ○ | 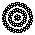 | 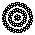 | 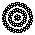 | 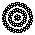 | ○ |
| | | 3 | 4.8 | 4.8 | 4.6 | 4.3 | 3.9 |
| Overall rating | | ○ | 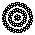 | 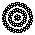 | 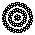 | 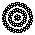 | ○ |
| | | 3.4 | 5 | 4.8 | 4.6 | 4.2 | 3.9 |

Even though the acid type was changed, the effect was observed (Sample 13). Preferable effects were observed in a wide alcohol content range and a wide acidity range and in a specified pH range and a specified gallic acid content range.

### (Test Example 4) Syringic acid, vanillin, and syringaldehyde

Tests similar to Test Examples 1 and 2 were performed using syringic acid, vanillin, or syringaldehyde instead of gallic acid. The following tables show the results.

**[Table 4A]**

| Sample | | 19 | 20 | 21 | 22 | 23 | 24 | 25 | 26 |
|---|---|---|---|---|---|---|---|---|---|
| | | Comparative Example | Example | Comparative Example | Example | Comparative Example | Example | Comparative Example | Example |
| Gallic acid | mg/L | | | | | | | | |
| Syringaldehyde | mg/L | 0.010 | 0.010 | 7 | 7 | | | | |
| Vanillin | mg/L | | | | | 0.010 | 0.010 | 3 | 3 |
| Syringic acid | mg/L | | | | | | | | |
| pH | | 3.1 | 3.3 | 3.1 | 3.3 | 3.1 | 3.3 | 3.1 | 3.3 |
| Acidity | g/100 ml | 0.25 | 0.3 | 0.25 | 0.3 | 0.25 | 0.3 | 0.25 | 0.3 |
| Alcohol | %v/v | 7 | 7 | 7 | 7 | 7 | 7 | 7 | 7 |
| Lack of bitterness | | ○ | 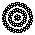 | Δ | ○ | ○ | 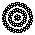 | 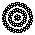 | 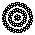 |
| | | 3.9 | 4.2 | 2 | 3.2 | 3.9 | 4.3 | 4.2 | 4.3 |
| Lack of astringency | | Δ | ○ | × | ○ | 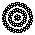 | 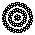 | 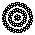 | 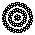 |
| | | 2.5 | 3.8 | 1.6 | 3 | 4.2 | 4.8 | 4 | 4 |
| Drinking Satisfaction specific to liquor | | Δ | ○ | 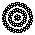 | 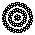 | Δ | ○ | Δ | ○ |
| | | 2.9 | 3.3 | 4.3 | 4.6 | 2.6 | 3 | 2.9 | 3.9 |
| Drinkability | | ○ | ○ | Δ | ○ | Δ | ○ | × | 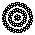 |
| | | 3 | 3.8 | 2.1 | 3 | 2.7 | 3.4 | 1.7 | 4.1 |
| Overall rating | | Δ | 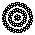 | × | ○ | Δ | ○ | Δ | ○ |
| | | 2.9 | 4.1 | 1.8 | 3.4 | 2.7 | 3.3 | 2.2 | 3.7 |

**[Table 4B]**

| Sample | | 27 | 28 | 29 | 30 | 31 |
|---|---|---|---|---|---|---|
| | | Comparative Example | Example | Comparative Example | Example | Example |
| Gallic acid | mg/L | | | | | 0.25 |
| Syringaldehyde | mg/L | | | | | 0.3 |
| Vanillin | mg/L | | | | | 0.1 |
| Syringic acid | mg/L | 0.01 | 0.010 | 3 | 3 | 0.1 |
| pH | | 3.1 | 3.3 | 3.1 | 3.3 | 3.7 |
| Acidity | g/100 ml | 0.25 | 0.3 | 0.25 | 0.3 | 0.5 |
| Alcohol | %v/v | 7 | 7 | 7 | 7 | 9 |
| Lack of bitterness | | Δ | Δ | Δ | ○ | 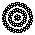 |
| | | 2.3 | 2.8 | 2.7 | 3 | 4.8 |
| Lack of astringency | | 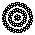 | 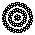 | × | ○ | 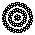 |
| | | 4.6 | 5 | 1.6 | 3.6 | 4.7 |
| Drinking Satisfaction specific to liquor | | Δ | ○ | 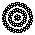 | 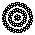 | 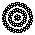 |
| | | 2.1 | 3.3 | 4 | 4.4 | 5 |
| Drinkability | | Δ | ○ | ○ | ○ | 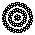 |
| | | 2.5 | 3.5 | 2.3 | 3.6 | 5 |
| Overall rating | | Δ | ○ | Δ | ○ | 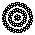 |
| | | 2.7 | 3.2 | 2.4 | 3.7 | 4.8 |

Even though any of syringic acid, vanillin, and syringaldehyde was used, the same tendency as in the case of using gallic acid was observed. Also if the four components were used at the same time, a preferable effect was observed.

## Claims

1. A packaged alcoholic beverage, comprising:
at least one compound selected from the group consisting of gallic acid, syringic acid, vanillin, and syringaldehyde at a total content of 0.01 to 10 ppm,
wherein a pH of the beverage is 3.2 or more and less than 5.0, and
acidity of the beverage in terms of citric acid is 0.26 g/100 mL or more.

2. The beverage according to claim 1, wherein a content of gallic acid is 0.01 to 4 ppm.

3. The beverage according to claim 1 or 2, wherein a content of syringic acid is 0.01 to 3 ppm.

4. The beverage according to any one of claims 1 to 3, wherein a content of vanillin is 0.01 to 3 ppm.

5. The beverage according to any one of claims 1 to 4, wherein a content of syringaldehyde is 0.01 to 7 ppm.

6. The packaged beverage according to any one of claims 1 to 5, wherein an alcohol content is 1 to 16 %v/v.

7. The packaged beverage according to any one of claims 1 to 6, comprising carbon dioxide.

8. The beverage according to any one of claims 1 to 7, comprising citric acid.

9. The beverage according to any one of claims 1 to 8, comprising gallic acid.
